## Europäisches Patentamt
## European Patent Office
## Office européen des brevets

(19)

(11) Veröffentlichungsnummer: **0 183 858**
**B1**

(12) **EUROPÄISCHE PATENTSCHRIFT**

(45) Veröffentlichungstag der Patentschrift:
**14.09.88**

(51) Int. Cl.⁴: **C 12 H 1/14,** C 12 C 11/04,
C 12 G 3/08

(21) Anmeldenummer: **84114093.2**

(22) Anmeldetag: **22.11.84**

(54) **Bier und Verfahren zu dessen Herstellung.**

(43) Veröffentlichungstag der Anmeldung:
**11.06.86 Patentblatt 86/24**

(45) Bekanntmachung des Hinweises auf die Patenterteilung:
**14.09.88 Patentblatt 88/37**

(84) Benannte Vertragsstaaten:
**AT BE CH DE FR GB IT LI LU NL SE**

(56) Entgegenhaltungen:
DE - A - 1 517 872
FR - A - 1 426 676
GB - A - 1 165 206
US - A - 1 390 711

SCHWEIZER BRAUEREI-RUNDSCHAU, Band 83, Nr. 1, 1972, Seiten 5-6, CH; K. STEINER: "Enzymatische Glycerinbestimmung im Bier"
IDEM
MICROBIOLOGY ABSTRACTS, SECTION A, Band 9, Nr. 4, April 1974, Zusammenfassung Nr. 9A1966, GB; E. STASKIEWICZ: "Beer for diabetics and the overweight"
CHEMICAL ABSTRACTS, Band 79, Nr. 13, 1. Oktober 1973, Seite 349, Nr. 76937n, Columbus, Ohio, US; R. GEHLHOFF u.a.: "Glycerol in beer. II. Effect of practical conditions"
Schormüller, Lehrbuch der Lebensmittelchemie (1974), Seite 622

(73) Patentinhaber: **Holsten-Brauerei AG,
Postfach 50 07 49 Hoistenstrasse 224,
D-2000 Hamburg 50 (DE)**

(72) Erfinder: **Dziondzlak, Klaus, Dr., Dicke Buche 29,
D-5910 Kreuztal-Krombach (DE)**

(74) Vertreter: **Vossius & Partner, Siebertstrasse 4 P.O.
Box 86 07 67, D-8000 München 86 (DE)**

**Beschreibung**

Die Erfindung betrifft ein Bier, insbesondere ein alkoholarmes oder alkoholfreies Bier, sowie ein Verfahren zu dessen Herstellung.

Es sind bereits zahlreiche Verfahren zur Herstellung von alkoholarmem oder alkoholfreiem Bier bekannt, bei denen einem nach herkömmlichen Brauverfahren hergestelltem Bier mit normalem Alkoholgehalt nachträglich mindestens ein Teil des Alkohols entzogen wird. Das in der DE-OS 14 42 238 beschriebene Verfahren dieser Art sieht ein Abdampfen des Alkohols in einem Dünnschichtverdampfer bei Temperaturen unterhalb von 70 °C vor. Aus der DE-AS 12 66 266 ist ferner ein ähnliches Verfahren bekannt, bei welchem das Bier zunächst einer Zerstäubungsverdampfung im Vakuum und dann einer anschliessenden Dünnschichtverdampfung im Vakuum unterworfen und der Rückstand rückverschnitten und mit Kohlensäure imprägniert wird.

Aus der DE-OS 24 05 543 und der DE-PS 7 21 249 sind ferner Verfahren zur adsorbtiven Alkoholentfernung aus Bier bekannt. Ein Verfahren zur Herstellung von alkoholarmem Bier durch Umkehrosmose ist in der DE-OS 23 23 094 offenbart. Daneben wurden Verfahren zur Herstellung alkoholarmer Biere durch Unterbrechung der Gärung oder Auskochen des Bieres in der Sudpfanne vorgeschlagen. Schliesslich besteht auch die Möglichkeit, dem Bier durch Hochdruckextraktion mit fluidem $CO_2$ Alkohol zu entziehen.

Alle vorgenannten Verfahren zum Alkoholentzug aus dem Bier haben den Nachteil, dass neben der Reduzierung des für die Vollmundigkeit wichtigen Alkoholgehaltes auch andere den sensorischen Gesamteindruck beeinflussende Stoffe mit entfernt werden, so dass die geschmackliche Qualität derartiger alkoholarmer oder alkoholfreier Biere den normalen Bieren in der Vollmundigkeit erheblich nachsteht. Hinzu kommt, dass die Umkehrosmose und die Hochdruckextraktion aufwendige und relativ störanfällige Anlagen erfordern und sich wegen der technischen Schwierigkeiten bisher in der Praxis nicht durchgesetzt haben.

Auch bei Vollbieren, Diätbieren, Starkbieren, Schankbieren und Einfachbieren mit Alkoholgehalten im Bereich zwischen etwa 1,5 und 6,0 Gewichtsprozent kann je nach den Ausgangsstoffen und Gärbedingungen das erhaltene Bier trotz unverminderten Alkoholgehalts hinsichtlich der Vollmundigkeit und anderer geschmacklicher Faktoren verbesserungsbedürftig sein.

In «Schweizer Brauerei-Rundschau», Bd. 83 (1972), S. 5-6 wird über den geschmacklichen Einfluss eines Zusatzes von Glycerin zu Bier berichtet: dieser wird bei 3g/l ($\triangleq$ 0,24 Vol.%) als merklich bezeichnet, während sich 2g/l ($\triangleq$ 0,16 Vol.%) geschmacklich noch nicht auswirkten. Über den Zusatz von Glycerin zur Verbesserung der physikalischen und der Trinkeigenschaften von vergorenen Getränken einschliesslich vergorener Getränke auf Getreidebasis mit niedrigem Alkoholgehalt berichtet auch US-A-1 390 711. Die empfohlene Zusatzmenge beträgt jedoch nur etwa 0,03 Vol.%. J. Schormüller erwähnt in «Lehrbuch der Lebensmittelchemie», 2. Aufl. (1974), S. 622 den Zusatz von Glycerin zur Steigerung der Vollmundigkeit von Wein.

Aufgabe der Erfindung ist es nun, ein Bier, insbesondere ein alkoholarmes oder alkoholfreies Bier, sowie ein Verfahren zu dessen Herstellung zu schaffen, das mit einfachen, unaufwendigen Mitteln eine verbesserte Vollmundigkeit ergibt.

Diese Aufgabe wird erfindungsgemäss durch ein Bier gelöst, das gekennzeichnet ist, durch einen die Vollmundigkeit verbessernden Gehalt von 0,3 bis 2,0 Vol.%, vorzugsweise 0,4 bis 1,5 Vol.% und insbesondere 0,5 bis 1,2 Vol.% Glycerin.

Auch bei herkömmlichen Brauverfahren wird zwar beim Vergären der Würze neben dem Äthylalkohol als Nebenprodukt eine geringe Menge Glycerin gebildet, die jedoch bei den nach den vorbekannten Brauverfahren erzeugten Bieren deutlich unter 2g/l liegt. Es ist auch bekannt, dass einige spezielle Hefearten, z. B. Zygosaccharomyces acidifaciens Nickerson, Saccharomyces rouxii und Saccharomyces mellis neben Äthylalkohol bis zu 50% der verbrauchten Kohlehydrate in Glycerin umwandeln. Diese Hefearten sind aber bisher nicht auf ihre Eignung zur Bierherstellung untersucht oder in Brauverfahren eingesetzt worden.

Erst die überraschende Erkenntnis, dass alkoholarme oder alkoholfreie Biere mit einem nach den herkömmlichen Brauverfahren nicht erzielbaren Glyceringehalt zwischen 0,3 und 2,0 Vol.% eine so stark verbesserte Vollmundigkeit aufweisen, dass sie sensorisch von entsprechenden, nicht alkoholreduzierten Bieren praktisch kaum zu unterscheiden sind, macht es sinnvoll, Biere mit entsprechendem Gehalt an zugesetztem oder während der Gärung in situ erzeugtem Glycerin zu schaffen.

Glycerin ist bekanntermassen eine süss schmeckende, in bestimmten Mengen auch giftige und schleimhautreizende Flüssigkeit; vergleiche Römpps Chemielexikon, 8. Auflage, Band 2 (1981, S. 1512, linke Spalte). Da nun Bier in der Regel keinen süssen Geschmack bekommen soll, konnte der Durchschnittsfachmann einen Zusatz von grösseren als den durch die natürliche Gärung im Bier bereits vorhandenen Glycerinmengen zur «Geschmacksbeeinflussung» jedenfalls nicht als wünschenswert und erfolgversprechend ansehen. Vielmehr musste er annehmen, dass die Angaben im Stand der Technik, z.B. US-A-1390711, die sich auf sehr geringe Glycerinmengen beziehen, durch die genannten Eigenschaften dieses Stoffes sehr wohl begründet sind.

Vorzugsweise enthalten die alkoholarmen Biere der Erfindung, die einen Alkoholgehalt zwischen 0,5 und 1,5 Gew.% aufweisen, zwischen 0,3 und 1,0 Vol.%, insbesondere zwischen 0,4 und 0,7 Vol.% Glycerin. Die im wesentlichen alkoholfreien Biere der Erfindung, die einen Alkoholgehalt von unter 0,5 Gew.% und vorzugsweise unter 0,1 Gew.% aufweisen, enthalten vorzugsweise 0,5 bis 1,8 Vol.%, stärker bevorzugt 0,7 bis 1,4 Vol.% und insbesondere zwischen 0,8 und 1,1 Vol.% Glycerin.

Im alkoholarmen oder alkoholfreien Bier der Erfindung kann der gesamte Glyceringehalt aus durch Vergären der Würze in Gegenwart einer vermehrt Glycerin erzeugenden Hefe in situ gebildetem Glycerin oder überwiegend aus in die Würze oder vor oder nach dem Alkoholentzug in das Bier eingebrachtem Glycerin bestehen.

Vorzugsweise kann das Bier der Erfindung zusätzlich noch 0,05 bis 0,5 Vol.% vorzugsweise 0,1 bis 0,3 Vol.% eines oder mehrerer Zuckeralkohole, insbesondere Erythrit und/oder D-Arabit, enthalten.

Gegenstand der Erfindung ist ferner ein Verfahren zur Herstellung von Bier, insbesondere alkoholarmem oder alkoholfreiem Bier, durch Vergären einer Würze sowie gegebenenfalls nachfolgendem Alkoholentzug, das gekennzeichnet ist, dass man zur Verbesserung der Vollmundigkeit durch Vergären unter zu vermehrter Glycerinbildung führenden Gärbedingungen und/oder Zugabe von Glycerin oder einer glycerinhaltigen Flüssigkeit einen Gehalt des Bieres zwischen 0,3 und 2,0 Vol.%, vorzugsweise zwischen 0,4 und 1,5 Vol.% und insbesondere zwischen 0,5 und 1,2 Vol.% einstellt.

Zur Herstellung eines alkoholarmen Bieres, bei welchem man ein nach herkömmlichen Brauverfahren erzeugtes Bier mit einem Alkoholgehalt über 1,5 Gew.% durch Eindampfen, Umkehrosmose, Alkoholadsorption oder Druckextraktion sowie gegebenenfalls nachfolgendes Verdünnen und Rekarbonisieren auf einen Alkoholgehalt zwischen 0,5 und 1,5 Gew.% einstellt, hält man vorzugsweise einen Glyceringehalt zwischen 0,3 und 1,0 Vol.% und insbesondere zwischen 0,4 und 0,7 Vol.% ein.

Zur Herstellung eines im wesentlichen alkoholfreien Bieres, bei welchem man ein nach herkömmlichen Brauverfahren erzeugtes Bier mit einem Alkoholgehalt über 1,5 Gew.% durch Eindampfen, Umkehrosmose, Alkoholadsorption oder Druckextraktion sowie gegebenenfalls nachfolgendes Verdünnen und Rekarbonisieren auf einen Alkoholgehalt unter 0,5 Gew.% und vorzugsweise unter 0,1 Gew.% einstellt, hält man meist einen Glyceringehalt zwischen 0,5 und 1,8 Vol.%, vorzugsweise zwischen 0,7 und 1,4 Vol.% und insbesondere zwischen 0,8 und 1,1 Vol.% ein.

In einer Ausführungsform des Verfahrens kann man in die Würze oder vor oder nach dem Alkoholentzug in das Bier eine glycerinhaltige Flüssigkeit, beispielsweise ein Bier mit hinreichendem Glyceringehalt einbringen.

Man kann auch das Bier einer Dünnschicht-Eindampfung im Vakuum unterwerfen und die glycerinhaltige Flüssigkeit in das eingedampfte Bier vor oder nach einer etwaigen Rückverdünnung einbringen.

Wenn man die Vergärung der Würze in Gegenwart der im Patentanspruch 12 genannten osmophilen Hefen durchführt, sollen die Gärbedingungen zweckmässig so gewählt werden, dass einerseits biertypische Bedingungen vorliegen und andererseits Bedingungen eingehalten werden, die eine auf Kosten der Alkoholproduktion vermehrte Glycerinproduktion gewährleisten. Hierzu können speziell aufbereitete Braumalze verwendet werden. Bei einigen dieser Malze wird zweckmässig ein Zusatz von durch diese osmophilen Hefen vergärbaren Zuckern, insbesondere Stärkezucker vorgenommen, da sie bei der Gärung den grössten Teil der Kohlehydrate des Malzes nicht verwerten können. In diesem Falle stellt der zugesetzte Zucker die wesentliche Kohlenstoffquelle für die anaerobe Gärung dar. Neben anderen biertypischen Stoffwechselprodukten kann sich dabei ein Verhältnis der Glycerinproduktion zur Alkoholproduktion von etwa 1:0,8 – 0,9 ergeben. Bei dieser Gärung werden, bezogen auf die gebildete Glycerinmenge etwa ein Drittel dieser Menge an Essigsäure und etwa 4% dieser Menge an Milchsäure gebildet, die jedoch beim Austreiben des Alkohols durch Vakuum-Eindampfung zusammen mit dem Äthylalkohol so weitgehend entfernt werden, dass sie die geschmacklichen Eigenschaften des erhaltenen Bieres nicht nachteilig beeinflussen.

Nach Abschluss der Gärung kann das erhaltene Bier vor oder nach einer Alkoholreduzierung noch mit nach einem anderen Verfahren hergestellten Bier gemischt und/oder einer Reifung und/oder Nachgärung mit einer anderen oder der gleichen Hefe unterzogen werden.

Das technisch und wirtschaftlich einfachste Verfahren besteht jedoch darin, entweder bereits der Würze oder dem nach der Gärung erhaltenen Bier vor oder nach einer etwaigen Alkoholreduzierung Glycerin oder eine glycerinhaltige Flüssigkeit in solcher Menge zuzusetzen, dass sich innerhalb des in den Patentansprüchen gesteckten Rahmens ein unter Berücksichtigung der Vollmundigkeit, der Geschmacksharmonie und der geschmacklichen Eigenschaften gewählter Glyceringehalt ergibt.

Im folgenden werden bevorzugte Ausführungsformen des Bieres und der entsprechenden Herstellungsverfahren an Hand von Beispielen weiter erläutert.

Beispiel 1

Aus einem im Handel befindlichen, nach herkömmlichen Verfahren hergestellten Qualitätsbier Pilsener Brauart mit milder Bittere, einem Stammwürzegehalt von 12 Gew.%, einem wirklichen Extraktgehalt von 4 Gew.%, einem Alkoholgehalt von etwa 4 Gew.% und einem Bitterwert von etwa 25 EBC-Einheiten wurde durch Vakuumdestillation einerseits ein alkoholarmes Bier mit einem Alkoholgehalt von 1,5 Gew.% und andererseits ein alkoholfreies Bier mit einem Alkoholgehalt unter 0,05 Gew.% hergestellt. Dem erhaltenen, alkoholarmen Bier wurden 0,5 Vol.% und dem alkoholfreien Bier 0,85 Vol.% reinstes Glycerin (Merck 4093, EWG-Nr. E 422) zugesetzt, die Biere dann mit Wasser auf das vor der Alkoholaustreibung vorhandene Ausgangsvolumen rückverdünnt und rekarbonisiert. Das Verkosten der so erhaltenen Biere ergab, dass beide Versuchsbiere dem im Handel befindlichen Ausgangsbier im Geruch überlegen und in Geschmack und Vollmundigkeit praktisch gleich waren und bei gleichem Schaumbild bessere Schaumhaltbarkeit und Schaumhaftungsvermögen zeigten.

Beispiel 2

Zur Herstellung eines dem im Beispiel 1 verwendeten, im Handel befindlichen Bier Pilsener Brauart sensorisch entsprechenden alkoholfreien Bieres wurde ausgehend von einem Malz mit einem Eiweissgehalt von 16 Gew.%, einer Farbe von 6 EBC, einer Kochfarbe von 11 EBC (bezogen auf Kongresswürzeverhältnisse), einer Viskosität der Kongresswürze von mindestens 1,75 mPa s, einer Mehlschrotdifferenz von 3 Gew.% einem Eiweisslösungsgrad von 44% und einem Gehalt an löslichem Stickstoff in 100 ml 12%iger Laboratoriumswürze von über 130 mg nach einem Zweimaischverfahren mit einer Temperaturfolge 50/75/ 77°C zur Erzielung eines niedrigen scheinbaren Endvergärungsgrades von etwa 25% eine Würze mit einem Stammwürzegehalt von 11 Gew.% und einem Bitterwert von 48 EBC-Einheiten hergestellt und durch Druckgärung mit einer untergärigen Hefe bei Gärtemperaturen zwischen 15 und 18°C bis zur Endvergärung (wirklicher Extraktgehalt 8 Gew.%, Alkoholgehalt 1,5 Gew.%) vergoren und einer anschliessenden Warmreifephase von 24 h unterzogen. Das erhaltene Bier wurde dann in einem Vakuumrotationsverdampfer bei einem Druck von etwa 15 mm Hg und Temperaturen von etwa 30°C bis auf einen Restalkoholgehalt von etwa 0,1 Gew.% entalkoholisiert, dann auf einen wirklichen Extraktgehalt von 4% rückverdünnt, mit 0,65 Vol.% Glycerin versetzt und rekarbonisiert. Das so erhaltene alkoholfreie Bier war bei der Verkostung im Vergleich zu dem im Handel befindlichen Ausgangsbier des Beispiels 1 im Geruch etwas schwächer, im Geschmack jedoch besser und in der Güte der Bittere und in der Vollmundigkeit gleich. Die Schaumhaltbarkeit und das Schaumhaftungsvermögen waren besser.

Beispiel 3

Nach dem Verfahren des Beispiels 2 wurde ein alkoholfreies Bier hergestellt, wobei jedoch jetzt eine obergärige Hefe und Gärtemperaturen zwischen 20 und 25°C verwendet wurden. Das so erhaltene alkoholfreie Bier erwies sich wegen seines höheren Gehaltes an Gärungsnebenprodukten im Vergleich zu dem im Handel befindlichen Ausgangsbier als im Geruch deutlich besser und in den übrigen sensorischen Merkmalen gleichwertig. Das Versuchsbier wurde insgesamt etwas besser bewertet.

Beispiel 4

Aus dem Malz gemäss Beispiel 2 wurde nach dem gleichen Zweimaischverfahren eine Würze mit einem Stammwürzgehalt von 14 Gew.% (davon 8 Gew.% durch Malzschüttung und 6 Gew.% durch Zusatz von Stärkezucker) und einem Bitterwert von 48 EBC-Einheiten hergestellt und durch Druckgärung bei einer Gärtemperatur von 25°C in Gegenwart von Zygosaccharomyces acidifaciens Nickerson bis weitgehend zur Endvergärung (auf diese Hefe bezogen) mit einem wirklichen Extraktgehalt von 9 Gew.%, einem Alkoholgehalt von 1,15 Gew.%, einem Glyceringehalt von 1,35 Gew.%, einem Essigsäuregehalt von 0,45 Gew.% und einem Milchsäuregehalt von 0,05 Gew.% vergoren. Das erhaltene Produkt wurde einer Warmreifephase von 24 h unterzogen, dann in einem Vakuumrotationsverdampfer auf einen Restalkoholgehalt von 0,1 Gew.% und einen Restsäuregehalt von 400 mg/l eingestellt, auf einen wirklichen Extraktgehalt von 4,5% rückverdünnt und rekarbonisiert. Bei den Angaben über den wirklichen Extraktgehalt ist zu berücksichtigen, dass 1,35 Gew.% Glycerin einem wirklichen Extraktgehalt von etwa 1 Gew.% entsprechen, so dass dieser bei Abwesenheit von Glycerin vor der Entalkoholisierung bei 8 Gew.% und nach Rückverdünung bei 4 Gew.% liegen würde. Auch dieses Bier hatte Pils-Charakter und erwies sich in seiner Vollmundigkeit und seinen sonstigen Geschmackseigenschaften dem Ausgangsbier des Beispiels 1 äquivalent.

Beispiel 5

Ein herkömmliches, im Handel befindliches Bier Pilsener Brauart mit einem Stammwürzgehalt von 11,4 Gew.%, einem wirklichen Extraktgehalt von 3,8 Gew.% und einem Alkoholgehalt von 3,7 Gew.% wurde mit einem mit dem Malz und dem Maischverfahren des Beispiels 2 erzeugten Bier mit einem Stammwürzegehalt von 15 Gew.%, einem wirklichen Extraktgehalt von 13 Gew.% und einem Alkoholgehalt von etwa 1 Gew.% und Wasser im Gewichtsverhältnis 3:1:4 verschnitten. Das erhaltene Gemisch mit einem Stammwürzegehalt von 6,15 Gew.%, einem wirklichen Extraktgehalt von 3,05 Gew.% und einem Alkoholgehalt von etwa 1,5 Gew.% wurde in einem Vakuumrotationsverdampfer auf einen Restalkoholgehalt von etwa 0,1 Gew.% eingestellt, mit Wasser auf das Ausgangsvolumen rückverdünnt, mit 0,65 Vol.% Glycerin versetzt und rekarbonisiert. Das erhaltene Bier besass Pils-Charakter und wurde im Vergleich zu dem im Handel befindlichen Ausgangsbier im Geruch und der Güte der Bittere besser bewertet und in der Vollmundigkeit höher eingeschätzt, während die übrigen geschmacklichen Merkmale gleich waren. Der Schaum des Versuchsbieres war feinporiger und zeigte eine bessere Haltbarkeit und ein besseres Haftungsvermögen. Insgesamt wurde das Versuchsbier bevorzugt.

Beispiel 6

Nach einem dem Beispiel 1 entsprechenden, jedoch auf Schankbier zugeschnittenen Verfahren wurde bei ansonsten gleichen Rohstoffmengen und -qualitäten (Stammwürzegehalt 8 Gew.% wirklicher Extraktgehalt 2,7 Gew.%, Alkoholgehalt 2,7 Gew.%, Bitterwert 25 EBC-Einheiten) ein Schankbier hergestellt und nachfolgend mit 0,5 Vol.% Glycerin versetzt. Das so erhaltene Bier besass Pils-Charakter und wurde im Geruch und Geschmack als reiner und besser beurteilt, während die Güte der Bittere, die Vollmundigkeit und die Schaumwerte keine signifikanten Unterschiede ergaben. Insgesamt wurde das Versuchsbier bevorzugt.

**Patentansprüche**

1. Bier, gekennzeichnet durch einen die Vollmundigkeit verbessernden Gehalt von 0,3 bis 2,0 Vol.%, vorzugsweise 0,4 bis 1,5 Vol.% und insbesondere 0,5 bis 1,2 Vol.% Glycerin.

2. Bier nach Anspruch 1, dadurch gekennzeichnet, dass es ein alkoholarmes Bier mit einem Alkoholgehalt von 0,5 bis 1,5 Gew.% und einem Glyceringehalt von 0,3 bis 1,0 Vol.% ist.

3. Bier nach Anspruch 1, dadurch gekennzeichnet, dass es ein im wesentlichen alkoholfreies Bier mit einem Alkoholgehalt unter 0,5 Gew.% und einem Glyceringehalt von 0,5 bis 1,8 Vol.% ist.

4. Alkoholarmes oder alkoholfreies Bier nach Anspruch 1 bis 3, dadurch gekennzeichnet, dass der gesamte Glyceringehalt aus durch Vergären der Würze in Gegenwart einer vermehrt Glycerin erzeugenden Hefe in situ gebildetem Glycerin besteht.

5. Alkoholarmes oder alkoholfreies Bier nach Anspruch 1 bis 3, dadurch gekennzeichnet, dass der Glyceringehalt überwiegend aus in die Würze oder vor oder nach dem Alkoholentzug in das Bier eingebrachtem Glycerin besteht.

6. Bier nach einem der Ansprüche 1 bis 5, dadurch gekennzeichnet, dass darin zusätzlich noch 0,05 bis 0,5 Vol.% vorzugsweise 0,1 bis 0,3 Vol.% eines oder mehrerer Zuckeralkohole, insbesondere Erythrit und/oder D-Arabit enthalten sind.

7. Verfahren zur Herstellung von Bier, insbesondere alkoholarmem oder alkoholfreiem Bier, durch Vergären einer Würze sowie gegebenenfalls nachfolgenden Alkoholentzug, dadurch gekennzeichnet, dass man zur Verbesserung der Vollmundigkeit durch Vergären unter zu vermehrter Glycerinbildung führenden Gärbedingungen und/oder Zugabe von Glycerin oder einer glycerinhaltigen Flüssigkeit einen Gehalt des Bieres zwischen 0,3 und 2,0 Vol.%, vorzugsweise zwischen 0,4 und 1,5 Vol.% und insbesondere zwischen 0,5 und 1,2 Vol.% einstellt.

8. Verfahren nach Anspruch 7 zur Herstellung eines alkoholarmen Bieres, bei welchem man ein nach herkömmlichen Brauverfahren erzeugtes Bier mit einem Alkoholgehalt über 1,5 Gew.% durch Eindampfen, Umkehrosmose, Alkoholadsorption oder Druckextraktion sowie gegebenenfalls nachfolgendes Verdünnen und Rekarbonisieren auf einen Alkoholgehalt zwischen 0,5 und 1,5 Gew.% einstellt, dadurch gekennzeichnet, dass man einen Glyceringehalt zwischen 0,3 und 1,0 Vol.% und vorzugsweise zwischen 0,4 und 0,7 Vol.% einhält.

9. Verfahren nach Anspruch 7 zur Herstellung eines im wesentlichen alkoholfreien Bieres, bei welchem man ein nach herkömmlichen Brauverfahren erzeugtes Bier mit einem Alkoholgehalt über 1,5 Gew.% durch Eindampfen, Umkehrosmose, Alkoholadsorption oder Druckextraktion sowie gegebenenfalls nachfolgendes Verdünnen und Rekarbonisieren auf einen Alkoholgehalt unter 0,5 Gew.% und vorzugsweise unter 0,1 Gew.% einstellt, dadurch gekennzeichnet, dass man einen Glyceringehalt zwischen 0,5 und 1,8 Vol.% vorzugsweise zwischen 0,7 und 1,4 Vol.% und insbesondere zwischen 0,8 und 1,1 Vol.% einhält.

10. Verfahren nach einem der Ansprüche 7 bis 9, dadurch gekennzeichnet, dass man in die Würze oder vor oder nach dem Alkoholentzug in das Bier eine glycerinhaltige Flüssigkeit, beispielsweise ein Bier mit hinreichendem Glyceringehalt einbringt.

11. Verfahren nach einem der Ansprüche 7 bis 10, bei welchem man das Bier einer Dünnschicht-Eindampfung im Vakuum unterwirft, dadurch gekennzeichnet, dass man die glycerinhaltige Flüssigkeit in das eingedampfte Bier vor oder nach einer etwaigen Rückverdünnung einbringt.

12. Verfahren nach einem der Ansprüche 7 bis 9, dadurch gekennzeichnet, dass man die Vergärung der Würze in Gegenwart einer osmophilen Hefe, insbesondere Zygosaccharomyces acidifaciens Nickerson, Saccharomyces rouxii oder Saccharomyces mellis durchführt.

13. Verfahren nach Anspruch 7 oder 12, dadurch gekennzeichnet, dass man das in der Würze verwendete Malz, die verwendete Hefe und die Gärbedingungen so abstimmt, dass bei der Gärung die Kohlehydrate des Malzes kaum verwertet werden.

14. Verfahren nach Anspruch 12 oder 13, dadurch gekennzeichnet, dass man in die Würze noch von der verwendeten osmophilen Hefe vergärbare Zucker, insbesondere Stärkezucker einbringt.

**Claims**

1. A beer, characterized by a content of 0.3 to 2.0 volume percent of glycerol, preferably 0.4 to 1.5 volume percent and most preferably 0.5 to 1.2 volume percent, whereby the full taste of the beer is improved.

2. Beer according to claim 1, characterized in that it is a low-alcohol beer having an alcohol content of 0.5 to 1.5 weight percent and a glycerol content of 0.3 to 1.0 volume percent.

3. Beer according to claim 1, characterized in that it is an essentially alcohol-free beer having an alcohol content of under 0.5 weight percent and a glycerol content of 0.5 to 1.8 volume percent.

4. Low-alcohol or alcohol-free beer according to claims 1 to 3, characterized in that the overall glycerol content in the beer consists of glycerol formed in situ and produced by fermentation of the wort in the presence of a yeast, which yeast produces an increased amount of glycerol.

5. Low-alcohol or alcohol-free beer according to claims 1 to 3, characterized in that the glycerol content predominantly consists of glycerol added to the wort or, before or after alcohol removal, to the beer.

6. Beer according to claims 1 to 5, characterized by an additional content of 0.05 to 0.5 volume percent, preferably 0.1 to 0.3 volume percent of at least one type of sugar alcohol, in particular erythritol and/or d-arabitol

7. Method for manufacturing beer, in particular low-alcohol or alcohol-free beer, by the fermentation of a wort and, optionally, subsequent alcohol removal, characterized in that, in order to improve the full taste, the glycerol content in the beer is adjusted to between 0.3 and 2.0 volume percent, preferably between 0.4 and 1.5 volume percent and most preferably between 0.5 and 1.2 volume percent, by fermenting under conditions which increase the glycerol formation and/or the addition of glycerol or a glycerol-containing liquid.

8. The method according to claim 7 for producing a low-alcohol beer, in which method the alcohol content of beer made in accordance with conventional brewing processes and having an alcohol content of above 1.5 weight percent is adjusted to between 0.5 and 1.5 weight percent by evaporation, reverse osmosis, alcohol adsorption or pressure extraction and, optionally, subsequent redilution and recarbonization, characterized in that the glycerol content in the beer is between 0.3 and 1.0 volume percent and preferably between 0.4 and 0.7 volume percent.

9. The method according to claim 7 for producing a substantially alcohol-free beer, in which method the alcohol content of beer made in accordance with conventional brewing processes and having an alcohol content of above 1.5 weight percent is adjusted to under 0.5 weight percent, and preferably under 0.1 weight percent, by evaporation, reverse osmosis, alcohol adsorption or pressure extraction and, optionally, subsequent redilution and recarbonization, characterized in that the glycerol content is between 0.5 and 1.8 volume percent, preferably between 0.7 and 1.4 volume percent and most preferably between 0.8 und 1.1 volume percent.

10. The method according to any of claims 7 to 9, characterized in that a glycerol-containing liquid, for instance a beer with a sufficient amount of glycerol, is added to the wort or, before or after alcohol removal, to the beer.

11. The method according to any of claims 7 to 10, in which the beer is subjected to a thin layer evaporation in vacuum, characterized in that the glycerol-containing liquid is brought into the evaporated beer before or after the optional redilution of the beer.

12. The method according to any of claims 7 to 9, characterized in that the fermentation of the wort is carried out in the presence of an osmophilic yeast, in particular zygosaccharomyces acidifaciens Nickerson, saccharomyces rouxii or saccharomyces mellis.

13. The method according to claim 7 or 12, characterized in that the malt used in the wort, the used yeast and the fermentation conditions are such that hardly any of the carbohydrates of the malt are utilized in the fermentation.

14. The method according to claim 12 or 13, characterized in that a sugar fermentable by the osmophilic yeast used, in particular starch sugar, is additionally brought into the wort.

## Revendications

1. Bière, caractérisée par une teneur améliorant la flaveur de 0,3 à 2,0% en volume de glycérine, de préférence de 0,4 à 1,5% en volume et en particulier de 0,5 à 1,2% en volume.

2. Bière suivant la revendication 1, caractérisée en ce qu'elle est une bière pauvre en alcool qui présente une teneur en alcool de 0,5 à 1,5% en poids et une teneur en glycerine de 0,3 à 1,0% en volume.

3. Bière suivant la revendication 1, caractèrisée en ce qu'elle est une bière sensiblement sans alcool qui présente une teneur en alcool inférieure à 0,5% en poids et une teneur en glycérine de 0,5 à 1,8% en volume.

4. Bière pauvre en alcool ou sans alcool suivant l'une des revendications 1 à 3, caractérisée en ce que la teneur globale en glycérine est constituée de glycérine formée in situ par fermentation du moût en présence d'une levure produisant de la glycérine de manière accrue.

5. Bière pauvre an alcool ou sans alcool suivant l'une des revendications 1 à 3, caractérisée en ce que la teneur en glycérine est de manière prépondérante constituée de glycérine introduite dans le moût ou dans la bière, avant ou après l'extraction d'alcool.

6. Bière suivant l'une des revendications 1 à 5, caractérisée en ce que 0,05 à 0,5% en volume, de préférence 0,1 à 0,3% en volume, d'un ou de plusieurs alcools de sucre, en particulier d'érythrite et/ou de D-arabite, sont encore contenus en supplément dans la bière.

7. Procédé de préparation de bière, en particulier de bière pauvre an alcool ou sans alcool, par fermentation d'un moût ainsi qu'éventuellement par extraction d'alcool ultérieure, caractérisé en ce que, pour améliorer la flaveur, on ajuste, par fermentation dans des conditions de fermentation provoquant une formation accrue de glycérine et/ou par addition de glycérine ou d'un liquide contenant de la glycérine, une teneur de la bière entre 0,3 et 2,0% en volume, de préférence entre 0,4 et 1,5% en volume, et en particulier entre 0,5 et 1,2% en volume.

8. Procédé suivant la revendication 7, pour la préparation d'une bière pauvre en alcool, dans lequel on ajuste une bière, qui est produite selon un procédé brassicole courant et qui présente une teneur en alcool supérieure à 1,5% en poids, à une teneur en alcool comprise entre 0,5 et 1,5% en poids, par vaporisation, osmose inversée, adsorption d'alcool ou extraction sous pression ainsi qu'éventuellement par dilution ultérieure et recarbonatation, caractérisé en ce qu'on maintient une teneur en glycérine entre 0,3 et 1,0% en volume, et de préférence entre 0,4 et 0,7% en volume.

9. Procédé suivant la revendication 7, pour la préparation d'une bière sensiblement sans alcool, dans lequel on ajuste une bière, qui est produite selon un procédé brassicole courant et qui présente une teneur en alcool supérieure à 1,5% en poids, à une teneur en alcool inférieure à 0,5% en poids, et de préférence inférieure à 0,1% en poids, par vaporisation, osmose inversée, adsorption d'alcool ou extraction sous pression ainsi qu'éventuellement par dilution ultérieure et recarbonatation, caractérisé en ce qu'on maintient une teneur en glycérine comprise entre 0,5 et 1,8% en volume, de préférence entre 0,7 et 1,4% en volume et en particulier entre 0,8 et 1,1% en volume.

10. Procédé suivant l'une des revendications 7 à 9, caractérisé en ce qu'on introduit dans le moût ou, avant ou après l'extraction d'alcool, dans la bière un liquide contenant de la glycérine, par exemple une bière ayant une teneur en glycérine suffisante.

11. Procédé suivant l'une des revendications 7 à 10, dans lequel la bière est soumise à une vaporisation en couche mince sous vide, caractérisé en ce qu'on introduit le liquide contenant de la glycérine dans la bière vaporisée avant ou après une éventuelle redilution.

12. Procédé suivant l'une des revendications 7 à 9, caractérisé en ce qu'on effectue la fermentation du moût en présence d'une levure osmophile, en particulier de Zygosaccharomyces acidifaciens Nickerson, de Saccharomyces rouxii ou de Saccharomyces mellis.

13. Procédé suivant l'une des revendications 7 et 12, caractérisé en ce qu'on accorde le malt utilisé dans le moût, la levure utilisée et les conditions de fermentation de façon que les hydrates de carbone du malt ne soient guère exploités au cours de la fermentation.

14. Procédé suivant l'une des revendications 12 et 13, caractérisé en ce qu'on introduit encore dans le moût du sucre fermentescible par la levure osmophile utilisée, en particulier du sucre d'amidon.